Europäisches Patentamt

(19) European Patent Office

Office européen des brevets

(11) Numéro de publication : **0 119 363**
**B1**

(12) **FASCICULE DE BREVET EUROPÉEN**

(45) Date de publication du fascicule du brevet :
16.06.87

(21) Numéro de dépôt : 83402439.0

(22) Date de dépôt : 15.12.83

(51) Int. Cl.⁴ : **B 25 J   9/00**, B 41 F 17/16

(54) **Robot pourvu d'un dispositif de marquage de produits.**

(30) Priorité : **17.12.82 FR 8221177**

(43) Date de publication de la demande :
**26.09.84 Bulletin 84/39**

(45) Mention de la délivrance du brevet :
**16.06.87 Bulletin 87/25**

(84) Etats contractants désignés :
**AT BE CH DE GB IT LI LU NL SE**

(56) Documents cités :
**DE-A- 2 445 559**
**DE-A- 2 625 933**
**DE-A- 2 751 186**
**FR-A- 2 398 611**
**US-A- 2 819 669**

(73) Titulaire : **LA CELLULOSE DU PIN**
**353 rue du Président Wilson**
**F-33100 Bordeaux (FR)**

(72) Inventeur : **Faurie, André**
**193 boulevard de la Plage**
**F-33120 Arcachon (FR)**
Inventeur : **Pedonne, Jean-Marie**
**159 boulevard Georges V**
**F-33400 Talence (FR)**

(74) Mandataire : **Muller, René et al**
**SAINT-GOBAIN RECHERCHE 39, quai Lucien Lefranc**
**F-93304 Aubervilliers (FR)**

Jouve, 18, rue St-Denis, 75001 Paris, France

## Description

La présente invention concerne le traitement automatique de produits. Par traitement automatique on entend une ou plusieurs opérations mécaniques réalisées à l'aide d'un robot industriel c'est-à-dire un dispositif comportant une partie proprement mécanique comprenant une structure mécanique articulée et un système d'actionneurs, une partie informatique comprenant des capteurs sensitifs, un système de traitement de l'information recevant les signaux acquis par les capteurs et donnant des ordres aux actionneurs. Plus particulièrement l'invention concerne un dispositif automatique pour le marquage d'un volume entouré d'une surface susceptible d'être imprimée, notamment des bobines de papier, comprenant un robot industriel à déplacements angulaires animant au bout de son poignet suivant un parcours grossier programmé, au moins un système d'impression.

Le robot industriel est un dispositif automatique qui est de plus en plus utilisé pour effectuer des traitements les plus divers sur des produits très variés. Il existe différents types de robots industriels parmi lesquels les robots à déplacements angulaires sont les plus répandus. Dans le cas d'un traitement d'un produit nécessitant le suivi de trajectoires déterminées, un problème rencontré par l'utilisation de tels robots industriels à déplacements angulaires est leur impossibilité d'œuvrer suivant une trajectoire parfaitement définie. En effet, le robot est un système articulé et son poignet décrit une succession de parcours d'autant plus courts que le nombre de points de programmation est élevé. A moins de programmer une infinité de points ce qui est impensable, la trajectoire du poignet du robot ne peut donc s'effectuer de façon parfaitement définie, et notamment, sauf dans des cas particuliers, le poignet ne peut se déplacer d'une manière continue parallèlement à la surface à œuvrer. Il lui est encore plus difficile de suivre une trajectoire parallèle à la surface à œuvrer, en restant en outre à une distance constante d'une autre surface de référence.

Le document DE-A 2 625 933 décrit un robot industriel équipé d'un bras mobile et d'un outil ou un porte-outil relié au bras par un élément d'assemblage de façon telle que l'outil est mobile par rapport au bras avec au moins un degré de liberté. Des capteurs disposés dans l'élément d'assemblage mesurent les variations de force ou de pression subies par l'outil sur l'objet à traiter, et en informent le robot qui modifiera son mouvement en conséquence. Néanmoins, le parcours définitif de l'outil reste entièrement dépendant de la programmation du robot, éventuellement réactualisée par l'action des détecteurs. Ce parcours reste un parcours défini point par point. Ce document a cependant servi à l'élaboration du préambule de la revendication 1.

Le problème à la base de l'invention est résolu par un dispositif caractérisé en ce qu'il comprend un dispositif de guidage qui prend appui sur au moins une surface du volume à imprimer, et qui utilise la forme du volume à imprimer pour faire suivre le parcours exact désiré au système d'impression, un système amortisseur disposé entre le poignet du robot industriel et le système d'impression, ce système amortisseur compensant les écarts de parcours entre le parcours programmé et le parcours exact désiré.

Le dispositif de guidage donne ainsi la régularité désirée pour le traitement.

Une application particulièrement intéressante du dispositif automatique de l'invention est son utilisation pour l'impression de produits et notamment leur marquage, marquage par jets d'encre, associé le cas échéant à un autre traitement.

Le marquage par jets d'encre consiste à projeter de l'encre selon les séquences données à partir de plusieurs buses alignées pour former des points d'encre qui définissent des caractères d'impression.

Le dispositif automatique selon l'invention comprend alors une tête de marquage et il permet le marquage de volumes ou produits entourés par des surfaces de formes très variées susceptibles d'être imprimées ou présentant eux-mêmes ces surfaces, le marquage pouvant être réalisé éventuellement en plusieurs emplacements orientés différemment. Outre une grande souplesse d'utilisation, ce dispositif fournit une inscription très régulière.

Dans les industries papetières, il est d'usage de marquer les bobines de papier sur la tranche et le roule. Le dispositif de l'invention équipé d'une tête de marquage permet une telle impression en plusieurs emplacements, et ceci de façon automatique. Ainsi il permet le marquage sur la tranche, en prenant appui sur elle, l'inscription pouvant s'effectuer avantageusement suivant des arcs de cercle centrés sur l'axe de la bobine. Ceci est avantageux car les indications apportées par le marquage de la bobine peuvent subsister jusqu'au bout du dévidage de la bobine.

Il permet aussi le marquage sur le roule parallèlement à la tranche, en prenant appui simultanément sur deux surfaces de la bobine, à savoir le roule et la tranche.

Avantageusement, on peut associer à la tête de marquage un second système œuvrant, par exemple un système de pose d'étiquettes.

On peut encore lui associer un système qui utilise des repères identiques pour leur positionnement. Ainsi on peut associer à la tête de marquage montée sur son système amortisseur, un système de pose de bouchons. Il est en effet d'usage d'introduire un bouchon qui peut être en fait une couronne, de chaque côté dans le mandrin de la bobine de papier afin d'augmenter la résistance à la déformation de cette dernière. La pose du bouchon s'effectue alors avantageusement au même poste de traitement de la bobine de papier que celui du marquage, et suite à un repérage du centre de la bobine, ce repérage étant utilisé par ailleurs pour le marquage sur la tranche.

Des exemples de réalisation du dispositif selon l'invention, adapté pour un tel marquage de bobines de papier, seront décrits par la suite en référence aux figures.

La figure 1 représente un système de marquage et son montage au bout du poignet d'un robot dans une réalisation d'un dispositif selon l'invention, selon une vue en élévation partiellement coupée.

La figure 2 représente la même partie du dispositif mais dans une vue de face.

La figure 3 représente cette même partie en vue de côté partiellement coupée.

La figure 4 représente un système de marquage associé à un système de pose de bouchons selon une vue en élévation partiellement coupée.

La figure 5 représente partiellement le système de marquage et de pose du bouchon de la figure 4 dans une vue de côté.

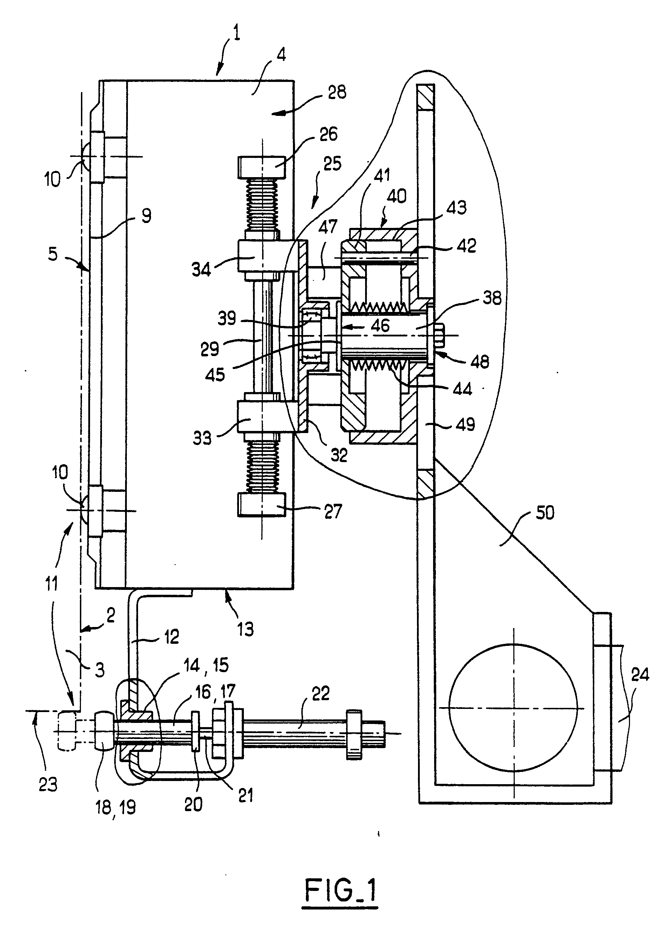

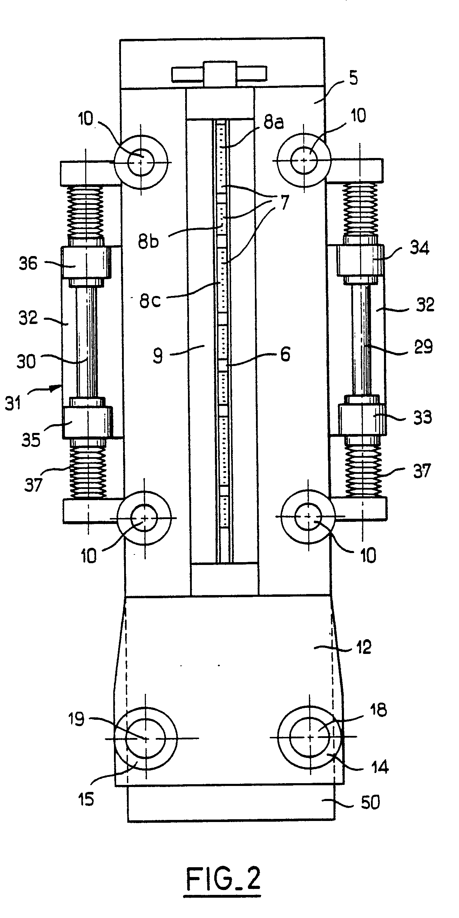

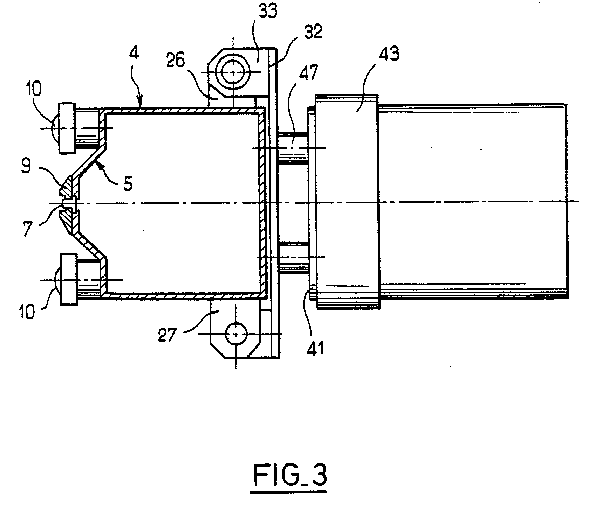

Sur les figures 1, 2 et 3, le système de marquage 1 représenté en position de travail pour le marquage du roule 2 d'une bobine de papier 3 comprend un caisson 4 muni sur sa face inférieure 5 d'une longue fente centrale 6 s'étendant sur l'essentiel de sa longueur, dans laquelle sont alignées des buses 7 pour l'impression par jets d'encre. Ces buses, au nombre d'une soixantaine, disposées par groupes 8a, 8b, 8c, etc ...., séparés par des espaces correspondants aux interlignes, chaque groupe étant susceptible de former un caractère d'inscription, sont maintenus dans la fente et en même temps protégées par un profilé 9 fixé au caisson. Chaque buse est reliée à une réserve d'encre par des tuyauteries non représentées. Son alimentation est commandée par une électrovanne elle-même commandée par un micro-processeur non représenté.

Montées aux quatre coins de la face inférieure du caisson, entourant la fente, des billes de roulement 10 servent de point de touche sur la surface à marquer. Ces quatre billes forment un palpeur et font partie du dispositif de guidage 11 pour le système de marquage ; elles maintiennent ainsi le système de marquage et notamment les buses à la distance désirée et constante de la surface à marquer.

Un bras 12, monté à une extrémité 13 du caisson 4 porte deux paliers 14, 15 traversés par deux tiges 16, 17 terminées chacune par une roulette 18, 19. Une entretoise 20 reliant les deux tiges 16, 17 est montée au bout de la tige 21 d'un vérin pneumatique 22. Cet ensemble de même que les quatre billes citées ci-dessus font partie du dispositif de guidage 11. Avec le montage décrit précédemment, les roulettes 18, 19 peuvent prendre deux positions :

une position de repos qui correspond à une rétractation de la tige 21 du vérin 22, les roulettes étant alors en arrière du plan de touche T défini par l'extrémité des 4 billes du palpeur,

une position de travail correspondant au bout de la course de sortie de la tige 21 du vérin 22, les roulettes 18, 19 étant alors en avant du plan de touche T défini précédemment. Dans cette position de travail, les deux roulettes sont appliquées contre la tranche 23 de la bobine de papier 3 comme indiqué par la suite, alors que les 4 billes du palpeur sont appliquées sur le roule 2 de la bobine.

La liaison entre le poignet 24 du robot industriel et le système de marquage est assuré par un système amortisseur 25. Ce système comprend, montés de façon rigide sur chacune des deux faces latérales 28 du caisson, deux paliers 26, 27 qui portent deux tiges longitudinales 29, 30, c'est-à-dire parallèles à l'axe de la fente 6. Sur ces deux tiges est monté un ensemble coulisseau 31 comprenant une plaque 32 munie de quatre œillets 33, 34, 35, 36. Entre les œillets et les paliers 26, 27 est disposé un système à débattement élastique tel des rondelles élastiques 37. Ce système autorise un débattement longitudinal de l'ensemble coulisseau le long des tiges 29, 30. Le coulisseau comporte aussi un arbre 38 perpendiculaire à la plaque 32 et qui porte cette dernière à son extrémité par l'intermédiaire d'un roulement à billes sphérique 39 permettant un mouvement d'oscillation de la plaque 32 par rapport à l'arbre 38. Sur cet arbre 38 est également monté un ensemble de guidage 40 comprenant un disque 41 percé de trous pour le passage de plusieurs tiges guide 42, par exemple 3, parallèles à l'arbre 38 et un tambour 43 portant ces tiges guide. Un autre système à débattement élastique formé également de rondelles élastiques 44 entoure l'arbre 38 entre le disque 41 et le tambour 43. Le tambour 43 est fixé en translation par rapport à l'arbre 38 alors que le disque peut bouger le long de celui-ci, ce mouvement étant limité d'un côté par une butée 45 montée sur un épaulement 46 de l'arbre 38 et de l'autre par l'élasticité des rondelles 44. Le disque 41 et la plaque 32 sont reliés par un système élastique en torsion formé de trois cylindres-blocs 47, qui limite le débattement circulaire de la plaque 32 par rapport à l'arbre 38. L'extrémité 48 de l'arbre 38 est montée coulissante dans une fenêtre 49 d'une structure 50 portée par le poignet 24 du robot.

Ce système de montage assure au système de marquage plusieurs débattements :

un premier débattement linéaire dans le sens longitudinal, le long des tiges 29 et 30, c'est-à-dire parallèle à la fente portant les buses, dû aux rondelles élastiques 37,

un deuxième débattement linéaire le long de l'arbre 38, perpendiculaire au premier, et à la surface à marquer, dû aux rondelles élastiques 44.

Ces deux débattements pouvant avoir des amplitudes de plusieurs centimètres.

deux débattements circulaires (ou de torsion) dus aux cylindres-blocs 47 et aux rondelles élastiques.

La structure portée par le poignet du robot est munie de deux interrupteurs de position de fin de course, non représentés, dont les signaux sont transmis à l'équipement de commande du robot.

Le robot industriel non représenté sur les figures est par exemple un robot industriel du type IRB 60, à 6 axes, commercialisé par la société ASEA. Ce robot comprend de façon connue un équipement de commande basée sur la technique des micro-ordinateurs.

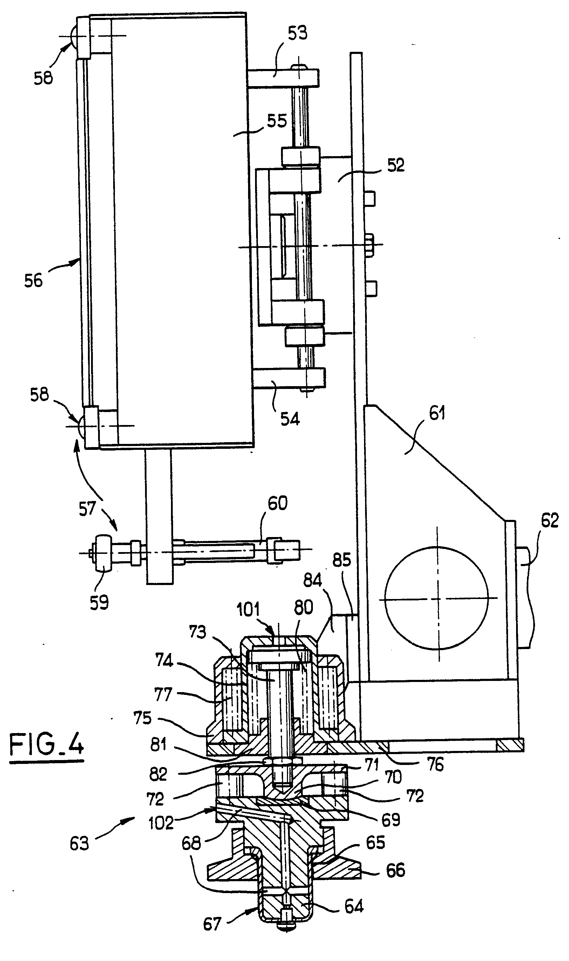

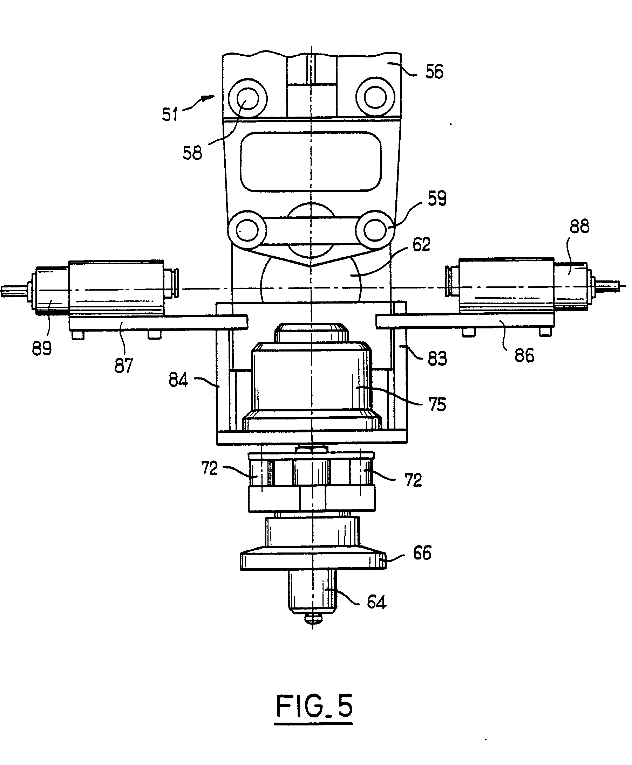

Les figures 4 et 5 représentent un dispositif muni d'un système de marquage pour les bobines de papier, associé à un système de pose de bouchons dans les mandrins des bobines de papier.

La tête de marquage 51 et le système amortisseur 52 sur lequel elle est montée ont des structures équivalentes à celles décrites en référence aux figures 1, 2 et 3. Dans cette réalisation, les paliers 53, 54 sont avantageusement montés sur la face 55 de la tête de marquage opposée à la face inférieure 56 munie des buses de marquage ce qui réduit l'encombrement du système à œuvrer. Le dispositif de guidage 57 comprend également des billes de roulement 58 disposées sur la face inférieure 56 de la boîte de marquage et un ensemble de deux roulettes escamotables 59 actionnées par un vérin 60 qui au cours du marquage du roule, s'appuient sur la tranche de la bobine.

Le dispositif comprend monté sur la structure 61 porté par le poignet 62 du robot, un système 63 pour la pose des bouchons. Ce système comporte un nez de prise 64 de bouchon autour duquel est monté, maintenu à l'aide d'une bague 65 et d'un écrou 66, une membrane élastique 67 gonflable par de l'air arrivant par un tuyau non représenté en communication avec une électrovanne, branché à l'entrée 101 de conduits 68. Le nez est muni d'un insert 69 présentant une surface sphérique 70 sur laquelle peut pivoter un embout 71 de tige. Entre l'embout 71 et le nez 64 sont disposés des cylindres blocs 72. L'embout est vissé sur une tige 73 placée dans un cylindre 74, entouré lui-même d'un contre-cylindre 75. Le contre-cylindre est monté vissé sur une platine 76 fixée au bout de la structure 61 portée par le poignet 62 du robot. Entre le cylindre 74 et le contre-cylindre 75 est placé un premier ressort 77 à boudin en appui sur le fond 78 du contre-cylindre et sur la base 79 du cylindre. Un second ressort 80 à boudin est disposé dans le cylindre 74 entre la tige 73 et une bague 81 fixée sur le cylindre. Un contre-écrou 82 maintien fixé la tige 73 dans l'embout 71. Deux goussets 83, 84 fixés sur la platine 76 et la structure 61, par l'intermédiaire ici d'une plaque de fixation 85, portent de part et d'autre du contre-cylindre, deux supports 86, 87 pour des interrupteurs de position 88, 89.

Le dispositif fonctionne de la manière suivante. Une bobine de papier disposée sur le roule arrive au poste de marquage et de pose des bouchons. Les parcours grossiers du poignet du robot étant programmés de façon connue, le système de pose des bouchons va saisir un bouchon. Celui-ci se présente en fait sous la forme d'une couronne, la surface externe étant munie d'un chanfrein. Pour la préhension du bouchon, le nez de prise de bouchon se place dans l'ouverture centrale du bouchon. A ce moment de l'air est introduit dans les conduits internes 68 afin de gonfler la membrane qui s'applique alors sur la face intérieure de l'ouverture centrale du bouchon. Le poignet du robot se déplace alors pour se présenter face à la tranche de la bobine. L'interrupteur de position 88 détecte deux points du mandrin creux de la bobine ce qui détermine le centre de celle-ci. Le poignet du robot pivote alors pour présenter le bouchon face au mandrin.

La tige 73 est alors actionnée par une entrée d'air sous pression par l'orifice 102, cette entrée d'air étant commandée par une électrovanne. Le bouchon, guidé par le chanfrein qu'il présente sur sa surface externe est alors enfoncé dans le mandrin, poussé par la face inférieure 89 de l'écrou 66. En même temps, la membrane élastique 67 est dégonflée par l'ouverture de l'électrovanne reliée au tuyau d'alimentation d'air. L'électrovanne commandant l'arrivée d'air sur la tête de la tige 73 est également ouverte et la tige 73 revient en arrière sous la poussée du ressort 80. En mettant à nouveau l'électrovanne en action on introduit à nouveau de l'air dans le but d'assurer l'enfoncement du bouchon par un ou éventuellement plusieurs coups frappés. La réaction au choc de ces coups est absorbée par le ressort 77 placé entre le cylindre 74 et le contre-cylindre 75. Le bouchon posé, le poignet du robot se dégage et pivote afin de présenter la tête de marquage face à la tranche de la bobine, les buses de marquage alignées étant orientées selon un axe radial de la bobine. La tête est appliquée contre la tranche et elle est guidée notamment par les billes 58 qui la maintiennent à la distance de marquage désirée. Le poignet du robot est alors animé pour que la tête de marquage décrive un arc de cercle autour du centre de la bobine déterminé au préalable par le contacteur 88 avant la pose du bouchon comme indiqué précédemment. Au cours du déplacement de la tête de marquage, les buses sont alimentées en encre de façon séquencée, programmée, afin de définir des caractères d'impression, un caractère étant défini par exemple par l'action de 7 ou de 14 buses voisines. Au cours du déplacement de la tête, celle-ci maintenue à distance fixe de la tranche de la bobine grâce notamment au dispositif de guidage comprenant les billes 58 et au système amortisseur sur lequel elle est montée.

Lorsque le marquage de la tranche est terminé, le poignet du robot dégage la tête de marquage et l'entraîne au bord de la bobine. L'interrupteur de position 88 repère le roule et le poignet place la tête de marquage au-dessus de celui-ci. Le vérin 60 commandant la sortie des roulettes 59 est actionné et la tête de marquage est placée en position correcte, les roulettes prenant appui sur la tranche de la bobine alors que les billes 58 sont en appui sur le roule. Le marquage du roule s'effectue alors comme pour le marquage de la tranche, les buses étant alimentées de façon séquencée et programmée, par de l'encre. Au cours du déplacement de la tête de marquage, le système amortisseur compense les écarts entre le parcours programmé de poignets de robot et la trajectoire désirée et exacte fournie par le système de guidage à roulettes et à billes.

Le dispositif étant équipé de deux détecteurs on peut œuvrer de la même façon sur une deuxième bobine placée face à la première.

## Revendications

1. Dispositif automatique pour le marquage d'un volume entouré d'une surface susceptible d'être imprimée, notamment des bobines de papier, comprenant un robot industriel à déplacements angulaires animant au bout de son poignet suivant un parcours grossier programmé, au moins un système d'impression, caractérisé en ce qu'il comprend un dispositif de guidage qui prend appui sur au moins une surface du volume à imprimer, et qui utilise la forme du volume à imprimer pour faire suivre le parcours exact désiré au système d'impression, un système amortisseur disposé entre le poignet du robot industriel et le système d'impression, ce système amortisseur compensant les écarts de parcours entre le parcours programmé et le parcours exact désiré.

2. Dispositif automatique selon la revendication 1, caractérisé en ce que le système d'impression est un système de marquage par jets d'encre.

3. Dispositif automatique selon une des revendications 1 ou 2, caractérisé en ce que le dispositif de guidage prend notamment comme référence la tranche de la bobine de papier en cas de marquage sur le roule.

4. Dispositif automatique selon une des revendications 1 à 3, caractérisé en ce qu'il comprend un interrupteur de position repérant le centre de la bobine pour un marquage en arc de cercle centré sur le centre.

5. Dispositif automatique selon une des revendications 1 à 4, caractérisé en ce que le système de guidage comprend des billes servant de point de touche sur la surface à marquer et des roulettes qui en cas de marquage sur le roule prennent appui sur la tranche.

6. Dispositif automatique selon une des revendications 1 à 5, caractérisé en ce que le système amortisseur procure deux débattements linéaires perpendiculaires entre eux et deux débattements circulaires au système à œuvrer.

7. Dispositif automatique selon une des revendications 1 à 6, caractérisé en ce qu'il comprend un autre système œuvrant associé au système d'impression.

8. Dispositif automatique selon une des revendications 1 à 7, caractérisé en ce qu'il comprend un système de pose de bouchons associé au système d'impression et qui utilise des repères identiques pour son positionnement.

9. Dispositif automatique selon la revendication 8, caractérisé en ce que le système de pose de bouchon comprend un ensemble amortissant la réaction d'un coup frappé.

## Claims

1. An automatic device for marking a volume surrounded by a surface capable of receiving printing, such as reels of paper, comprising an industrial robot capable of angular displacements and moving at least one printing system on its wrist according to a programmed approximate path, characterised in that it comprises a guide device which makes contact with at least one surface of the volume to receive printing, and which uses the shape of the volume receiving printing to cause the printing system to follow a desired exact path, and a damping system arranged between the wrist of the industrial robot and the printing system, the damping system compensating for differences in path between the programmed path and the desired exact path.

2. An automatic device according to claim 1, characterised in that the printing system is a marking system using ink jets.

3. An automatic device according to claim 1 or 2, characterised in that the guide device takes for reference, rotatably, the end face of the reel of paper in the case of marking a reel.

4. An automatic device according to one of claims 1 to 3, characterised in that it comprises a switch locating the centre of the reel for marking in an arc of a circle centred on the centre of the reel.

5. An automatic device according to one of claim 1 to 4, characterised in that the guide system comprises balls serving as touch points on the surface to be marked and rollers which, in the case of marking on the reel, come into contact with its end face.

6. An automatic device according to one of claims 1 to 5, characterised in that the damping system gives two perpendicular linear deflections and two circular deflections to the operating system.

7. An automatic device according to one of claims 1 to 6, characterised in that it comprises a further operating system associated with the printing system.

8. An automatic device according to one of claims 1 to 7, characterised in that it comprises a system for mounting plugs associated with the printing system and which uses identical reference points for positioning.

9. An automatic device according to claim 8, characterised in that the system for mounting a plug comprises an assembly for damping the reaction of an impact.

## Patentansprüche

1. Automatische Vorrichtung zum Bedrucken eines von einer beschriftbaren Fläche umgebenen Gegenstandes, insbesondere von Papierrollen, mit einem Industrieroboter zur Ausführung von Winkelverschiebungen, bei dem das Ende des Arbeitsarmes einem programmierten groben Bahnverlauf folgt, und mit mindestens einer Druckeinrichtung, dadurch gekennzeichnet, daß die Vorrichtung eine Führung, die sich auf mindestens einer Fläche des zu beschriftenden Gegenstandes abstützt und dessen Form zur Verfolgung des gewünschten genauen Bahnverlaufes der Druckeinrichtung verwendet, und ein zwischen dem Arbeitsarm des Industrieroboters und der Druckeinrichtung angeordnetes Dämpfungssystem für den Ausgleich der Bahnverlaufabweichungen zwischen dem programmierten und dem gewünschten exakten Bahnverlauf aufweist.

2. Vorrichtung nach Anspruch 1, dadurch gekennzeichnet, daß die Druckeinrichtung durch ein auf Farbstrahlen basierendes System gebildet ist.

3. Vorrichtung nach Anspruch 1 oder 2, dadurch gekennzeichnet, daß bei einem Drucken auf der Rolle als Bezug für die Führung die Schnittfläche der Papierrolle dient.

4. Vorrichtung nach einem der Ansprüche 1 bis 2, dadurch gekennzeichnet, daß die Vorrichtung einen Positionsschalter aufweist, der das Zentrum der Papierrolle bei einem Bedrucken in einem Kreisbogen festhält, der auf dem Zentrum zentriert ist.

5. Vorrichtung nach einem der Ansprüche 1 bis 4, dadurch gekennzeichnet, daß die Führung als Anlagepunkte auf der zu beschriftenden Fläche dienende Kugeln und Rollen aufweist, die bei einem Drucken auf der Papierrolle sich auf der Schnittfläche der Rolle abstützen.

6. Vorrichtung nach einem der Ansprüche 1 bis 5, dadurch gekennzeichnet, daß das Dämpfungssystem zwei lineare zueinander senkrechte Federungen und zwei längs eines Kreises wirksame Federungen gegenüber dem zu betätigenden System beinhaltet.

7. Vorrichtung nach einem der Ansprüche 1 bis 6, dadurch gekennzeichnet, daß die Vorrichtung ein weiteres Arbeitssystem aufweist, welches der Druckeinrichtung beigeordnet ist.

8. Vorrichtung nach einem der Ansprüches 1 bis 7, dadurch gekennzeichnet, daß die Vorrichtung ein der Druckeinrichtung beigeordnetes System zum Aufbringen von Zapfen aufweist, für welches zur Positionierung die identischen Markierungen verwendet werden.

9. Vorrichtung nach Anspruch 8, dadurch gekennzeichnet, daß das System zum Einbringen von Zapfen eine die Schlagauswirkungen dämpfende Einrichtung aufweist.

**0 119 363**

FIG_1

FIG.2

2

FIG. 3

FIG.4

FIG. 5